# EUROPÄISCHE PATENTSCHRIFT

(11) **EP 1 718 506 B1**
(45) Veröffentlichungstag und Bekanntmachung des Hinweises auf die Patenterteilung: **25.06.2008**
(21) Anmeldenummer: 05700715.5
(22) Anmeldetag: 07.01.2005
(51) Int. Cl.: B60S 1/04, B60S 1/08

(54) **FAHRZEUG MIT EINER SCHEIBENWISCHERANLAGE**
VEHICLE COMPRISING A WINDSHIELD WIPER SYSTEM
VEHICULE POURVU D'UN SYSTEME ESSUIE-GLACE

(30) Priorität: 16.02.2004 DE 102004007350
(43) Veröffentlichungstag der Anmeldung: 08.11.2006
(73) Patentinhaber: Volkswagen Aktiengesellschaft, 38436 Wolfsburg (DE)
(72) Erfinder: OSTROWSKI, Wolfgang, 38446 Wolfsburg (DE)
(86) Internationale Anmeldenummer: PCT/EP2005/000055
(87) Internationale Veröffentlichungsnummer: WO 2005/077721

(56) Entgegenhaltungen:
- EP-A- 0 684 170
- EP-A- 1 029 758
- WO-A-02/14123

## Beschreibung

Die Erfindung betrifft ein Fahrzeug mit einer Scheibenwischeranlage, die ein (Antriebs-) Gestänge aufweist, das mit wenigstens einer Antriebswelle für einen Wischerarm gekoppelt ist.

Scheibenwischeranlagen mit einem Gestänge weisen vorteilhafter- und heute auch üblicherweise einen am Fahrzeugkörper anordbaren Träger mit einem vormontierten Wischermotor, einem Getriebe und einer Antriebskurbel als Antrieb und je nach Bauart und Betriebsweise einen oder zwei im Abstand zur Antriebskurbel angeordnete Lagerböcke auf, in denen jeweils eine Antriebswelle für einen Wischerarm angeordnet ist, mit der ein Schwenkhebel drehfest verbunden ist. Dabei ist die Antriebskurbel durch das Gestänge gelenkig mit dem jeweiligen Schwenkhebel verbunden. Eine derartige Scheibenwischeranlage wird als Baueinheit an der Fahrzeugkarosserie befestigt, wobei der Träger bevorzugt an wenigstens zwei auseinander liegenden Stellen, insbesondere an den Lagerböcken, und an einer dritten Stelle an der Fahrzeugkarosserie befestigt ist, derart, dass die durch die Wischerbewegung hervorgerufenenen Reaktionskräfte aufgenommen werden können und eine Schwenkbewegung des Trägers um eine durch die beiden auseinander liegenden Befestigungsstellen bestimmte Achse unterbleibt.

Scheibenwischeranlagen mit zwei Wischerarmen können als Gleichlauf- oder Gegenlaufanlagen konzipiert und betrieben werden, wobei die Wischerarme einer Gleichlaufanlage im Wischerbetrieb die gleiche (Pendel-) Schwenkrichtung und die einer Gegenlaufanlage eine gegenläufige Schwenkrichtung haben. Bei letzteren gibt es wiederum einmotorige Anlagen, bei denen das (Antriebs-)Gestänge ein Zwischengetriebe oder ein (Dreigelenk-) Zwischenlager aufweist und die Wischerwellen einen großen Abstand voneinander haben, oder zweimotorige Anlagen mit einem fahrerseitigen und einem beifahrerseitigen Teil mit jeweils einem Motor und einer nur kurzen Antriebsstange, die getrennt voneinander an der Fahrzeugkarosserie festgelegt werden und deren (Pendel-) Schwenkbewegung aufeinander abgestimmt wird. Die an den Wischerarmen angeordneten Wischerblätter überstreichen bei ihrer Pendelbewegung auf der Frontscheibe ein vorbestimmtes Wischfeld, wobei sich die Wischfelder überschneiden und sich das resultierende Wischfeld einer Gleichlaufanlage von dem einer Gegenlaufanlage unterscheidet. Der Vorteil letzterer besteht darin, dass das Wischfeld des beifahrerseitigen Wischerblattes bis zum Seitenrand der Frontscheibe ausgedehnt sein kann. Allerdings ist eine Gegenlaufanlage erheblich aufwändiger als eine Gleichlaufanlage, insbesondere dann, wenn die Gegenlaufanlage als zweimotorige Anlage mit einem fahrerseitigen Teil und einem beifahererseitigen Teil konzipiert ist. Die Auswahl des Scheibenwischertyps ist abhängig von den Einsatzbedingungen des Fahrzeugs. Die Befestigungsanordnungen für die verschiedenen Scheibenwischeranlagen sind unterschiedlich, so dass an einem bestimmten Fahrzeugtyp nicht wahlweise die eine oder die andere Scheibenwischeranlage montiert werden kann, da dieser Fahrzeugtyp zur Anordnung einer für diesen vorbestimmten Scheibenwischeranlage konzipiert wird.

Aus der EP 1 029 758 A2 ist ein Gegenlaufanlage bekannt, die durch einen dritten Wischerarm mit einem Wischerblatt für einen mittleren Frontscheibenbereich ergänzt worden ist, wobei diese auf einer Antriebswelle befestigt ist, die zwischen den Antriebswellen des Wischerarmes für die Fahrerseite und des Wischerarmes für die Beifahrerseite angeordnet ist. Dabei ist eine Gegenlaufanlage mit einer Gleichlaufanlage kombiniert worden. Diese kombinierte Scheibenwischeranlage ist mit Befestigungsmitteln zur Anordnung an der Fahrzeugkarosserie versehen, die mit an der Fahrzeugkarosserie ausgebildeten Befestigungseinrichtungen derart korrespondieren, dass diese die wahlweise spiegelsymmetrische Anordnung der Scheibenwischeranlage bei Linkslenker- oder Rechtslenkerfahrzeugen ermöglichen.

Es ist Aufgabe der Erfindung, an einem Fahrzeug mit einer Scheibenwischeranlage nach dem Oberbegriff des Anspruchs 1 die wahlweise Anordnung einer Gleichlauf- oder einer Gegenlaufanlage zu ermöglichen.

Diese Aufgabe wird bei einem Fahrzeug nach dem Oberbegriff des Anspruchs 1 durch dessen kennzeichnende Merkmale gelöst. Vorteilhafte Ausgestaltungen sind in den Unteransprüchen beschrieben.

Die Erfindung entwickelt die Anordnung einer Scheibenwischeranlage weiter, die in bekannter Weise einen Träger mit Befestigungsmitteln zur Anordnung an einer Fahrzeugkarosserie aufweist, an den ein Wischermotor, ein Getriebe, eine Antriebskurbel und wenigstens ein (Antriebs-) Gestänge angeordnet sind, das letztere mit einer Antriebswelle für einen Wischerarm über einen Schwenkhebel gelenkig verbindet, und bei der die Befestigungsmittel mit an der Fahrzeugkarosserie ausgebildeten Befestigungseinrichtungen korrespondieren, deren Anzahl und Position so bestimmt ist, dass diese die Anordnung sowohl einer Gegenlaufanlage als auch einer Gleichlaufanlage nach Art eines Baukastensystems zulassen. Die Erfindung besteht darin, dass an einem an der Fahrzeugkarosserie ausgebildeten Scheibenquerträger in Fahrzeugquerrichtung fahrer- und beifahrerseitig jeweils drei im gleichen Abstand voneinander angeordnete Befestigungseinrichtungen angeordnet sind. Von diesen sind jeweils die äußere, also die fahrzeugaußenseitige, und die mittlere Befestigungseinrichtung für den einen Teil einer Zwei-Motoren-Gegenlaufanlage vorgesehen und jeweils die äußere und die innere für eine Gleichlaufanlage. Fahrer- und beifahrerseitig ist zudem eine weitere Befestigungseinrichtung zur Drehmomentabstützung an der Fahrzeugkarosserie im Abstand von der Verbindungslinie der äußeren und der mittleren Befestigungseinrichtung ausgebildet.

Durch die Anzahl und Position der fahrzeugseitgen Befestigungseinrichtungen als eine Komponente des Systems ist dabei auf einfache Weise die fahrzeugseitige Voraussetzung für die wahlweise Anordnung einer Gegenlauf- oder einer Gleichlaufanlage als zweite Komponente des Systems gegeben, die ihrerseits jeweils mit Befestigungsmitteln versehen ist, die an die fahrzeugseitigen Befestigungseinrichtungen angepasst sind. Dadurch ist es möglich, herstellerseitig einen bestimmten Fahrzeugtyp wahlweise mit dem einen oder dem anderen Typ einer Scheibenwischeranlage auszurüsten, und auch, dass zu jeder Zeit ein Austausch des einen Typs einer Scheibenwischeranlage gegen einen anderen Typ vorgenommen werden kann, ohne dass dazu am Fahrzeug andere Befestigungsvoraussetzungen geschaffen werden müssen.

Darüber hinaus ist eine weitere Befestigungseinrichtung fahrer- und beifahrerseitig im Abstand von der Verbindungslinie der äußeren und der mittleren Befestigungseinrichtung zur Drehmomentabstützung an der Fahrzeugkarosserie ausgebildet. Diese ist bevorzugt als ein Steckverbindungselement zur Herstellung einer eine Montage erleichternden Steckverbindung mit einem am jeweiligen Träger angeordneten Gegenstück gestaltet. Soll das Fahrzeug anstelle der Gegenlaufanlage mit einer Gleichlaufanlage ausgerüstet werden, so dienen die äußere und die innere der drei im gleichen Abstand voneinander ausgebildeten Befestigungseinrichtungen, bevorzugt auf der Fahrerseite, der Aufnahme einer Gleichlaufanlage.

Der Träger der jeweiligen Scheibenwischeranlage ist zur Befestigung an der die vorstehend genannten Befestigungseinrichtungen aufweisenden Fahrzeugkarosserie mit zwei im Abstand voneinander angeordneten Befestigungsmitteln versehen, wobei die beiden Befestigungsmittel des Trägers einer Gegenlaufanlage nur den halben Abstand voneinander haben als die des Trägers einer Gleichlaufanlage. Ein drittes Befestigungsmittel, insbesondere ein Steckverbindungselement, ist über ein Halteblech im Abstand von der Verbindungslinie der beiden ersten Befestigungsmittelmittel angeordnet und kann bei einer Gleichlaufanlage im wesentlichen in der Mitte zwischen diesen und bei dem einem Teil einer Gegenlaufanlage im Bereich des jeweils inneren Befestigungsmittels, das mit der mittleren Befestigungseinrichtung korrespondiert, ausgebildet sein, so dass dieses dritte Befestigungsmittel bei den unterschiedlichen Scheibenwischerarten bezüglich der Fahrzeugkarosserie stets die gleiche Position hat.

Um die Anschlussbedingungen der beiden Scheibenwischeranlagen anzugleichen, kann eine Gleichlaufanlage auf einfache Weise aus dem einem Teil einer Zwei-Motoren-Gegenlaufanlage gestaltet werden, indem der Träger letzterer verlängert und mit einem zweiten Wischerlager versehen wird, in dem eine mit einem Schwenkhebel versehene zweite Wischerwelle gelagert ist, wobei am Schwenkhebel eine zweite Antriebsstange angelenkt ist, die gelenkig mit der Antriebskurbel verbindbar ist. Diese zweite Antriebsstange kann alternativ anstelle an der Antriebskurbel auch am Schwenkhebel der ersten Wischerwelle angelenkt sein und als sogenannte Schleppstange dessen Schwenkbewegung übertragen. Das so bestückte Verlängerungsstück wird als Vormontageeinheit über eine Schraubverbindung mit dem Träger verbunden, oder, wenn der Träger ein Rohr ist, auch über eine Schrumpfverbindung.

Die Erfindung wird nachstehend anhand eines Ausführungsbeispiels erläutert. In den zugehörigen Zeichnungen zeigen, teilweise schematisch:
- Fig. 1:: die Frontscheibe eines Fahrzeugs mit einem Scheibenquerträger und an diesem ausgebildeten Befestigungseinrichtungen für verschiedene Scheibenwischeranlagen,
- Fig. 2:: den fahrerseitigen Teil einer zweimotorigen Gegenlaufanlage in einer Draufsicht,
- Fig. 4:: eine Gleichlaufanlage in der Draufsicht und
- Fig. 5:: diese in der Rückansicht.

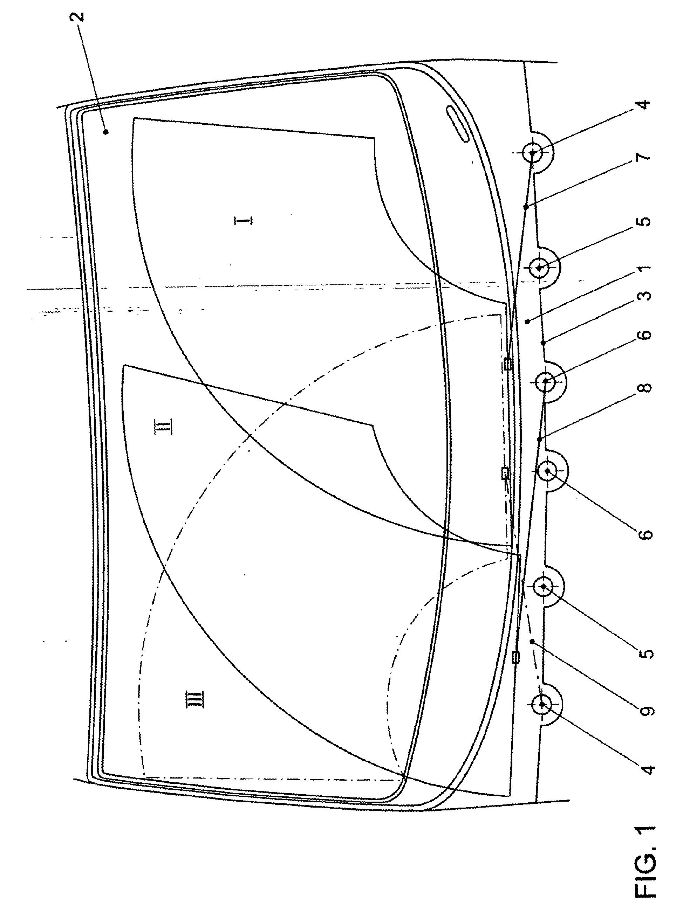

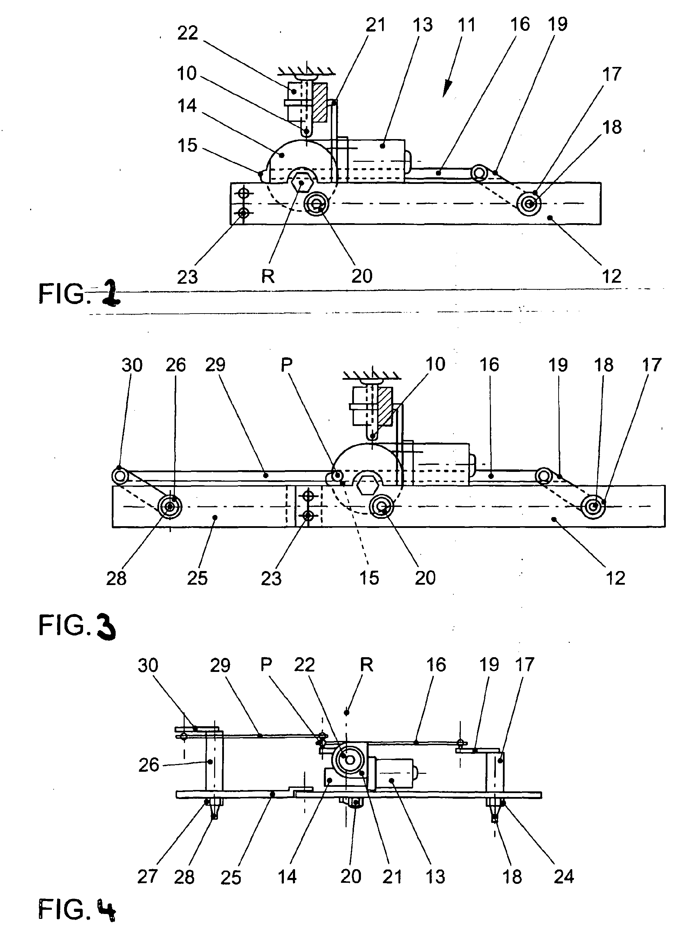

In Fig. 1 ist ein fahrzeugfester Scheibenquerträger 1 gezeigt, an dem eine Frontscheibe 2 mit ihrem unteren Randbereich befestigt ist. An der unteren Kante 3 des Scheibenquerträgers 1 sind fahrerseitig und beifahrerseitig jeweils drei Befestigungslöcher 4, 5 und 6 als Befestigungseinrichtungen für eine Scheibenwischeranalge angeordnet. Diese haben den gleichen Abstand voneinander. Jeweils das äußere und das mittlere Befestigungsloch 4 und 5 sind für den einen Teil einer Zwei-Motoren-Gegenlaufanlage vorgesehen und das äußere und das innere Befestigungsloch 4 und 6 für eine Gleichlaufanlage. In der Fig. sind die beiden Wischerarme 7 und 8 einer fahrerseitig angeordneten Gleichlaufanlage und deren Wischfelder I und II und zwei Wischerarme 7 und 9 einer Zwei-Motoren-Gegenlaufanlage und deren Wischfelder I und III angedeutet. Dabei ist der fahrerseitige Wischerarm 7 sowohl Bestandteil der Gleichlaufanlage als auch Bestandteil der Gegenlaufanlage, die wahlweise anordbar sind. An den beifahrerseitigen Befestigungslöchern 4 und 6 ist alternativ zur fahrerseitig angeordneten Gleichlaufanlage eine spiegelbildlich ausgebildete anordbar. Im Bereich des -jeweiligen mittleren-Befestigungsloches-5-ist an einer nicht dargestellten Schottwand im Abstand von der Verbindungslinie der Befestigungslöcher 4 und 5 ein Steckbolzen (10, Fig. 2 und 3) zur Herstellung einer Steckverbindung fest angeordnet, der als dritte Befestigungseinrichtung für die jeweilige Scheibenwischeranlage dient.

In Fig. 2 ist der fahrerseitige Teil 11 einer Zwei-Motoren-Gegenlaufanlage dargestellt. Dieser weist einen langgestreckten Träger 12 mit einem vormontierten Wischermotor 13 mit einem Getriebe 14 und einer Antriebskurbel 15, eine an dieser angelenkte Antriebsstange 16 und ein Wischerlager 17 auf, wobei die Antriebsstange 16 an ihrem der Antriebskurbel abgewandten Ende an einem Schwenkhebel 19 angelenkt ist, der mit einer im Wischerlager 17 gelagerten Wischerwelle 18 drehfest verbunden ist. Am Träger 12 ist des Weiteren Im Abstand zweier benachbarter Befestigungseinrichtungen 4, 5 bzw. 5, 6 wischerarmseitig ein Gewindebolzen 20 angeschweißt. Am Polgehäuse des Wischermotors 13 ist ein Halteblech 21 befestigt, an dem an einer Abwinklung eine Steckbuchse 22 aus einem elastischen Material zur Anordnung am Steckbolzen 10 gehaltert ist, wobei die Steckrichtung im wesentlichen quer zur Rotationsachse R der Antriebskurbel 15 gegeben ist. Diese Steckbuchse 22 ist im Abstand von der Verbindungslinie zwischen dem Wischerlager 17 und dem Gewindebolzen 20 angeordnet. Überdies sind am Träger 12 an dem motorseitigen Ende des Gewindebolzens 19 zwei Schraublöcher 23 ausgebildet.

Der fahrerseitige Teil 11 wird mit seinem Wischerlager 17, das einen Lagerkörper mit einem auf der der Antriebsstange 16 abgewandten Seite des Trägers 12 ausgebildeten Außengewinde 24 aufweist, dem Gewindebolzen 20 und der Steckbuchse 22 an den karosserieseitig ausgebildeten Befestigungslöchern 4 und 5 und dem karosserieseitigen Steckbolzen 10 festgelegt, wobei das Wischerlager 17 und der Gewindebolzen am Scheibenquerträger durch eine Schraubverbindung befestigt werden. Im Betriebszustand mit der entsprechenden Pendelbewegung der Wischerwelle 18 und dem angeschlossenen Wischerarm 7 ergibt sich das Wischfeld I (Fig. 1). Auf der Beifahrerseite wird spiegelbildlich der beifahrerseitige Teil der Gegenlaufanlage (Wischerarm 9) befestigt, der das Wischfeld III überstreicht.

In den Fig. 3 und 4 ist eine Gleichlaufanlage als Erweiterung des Teils 11 der vorstehend beschriebenen Gegenlaufanlage dargestellt. Der Träger 12 ist dabei durch ein angeschraubtes (Schraublöcher 23) Verlängerungsstück 25 verlängert, das mit einem mit dem inneren fahrerseitigen Befestigungsloch 6 korrespondierenden Wischerlager 26, dessen Lagerkörper ebenfalls mit einem Außengewinde 27 versehen ist, der im Wischerlager 26 gelagerten Wischerwelle 28 und einer Antriebsstange 29, die an einem drehfest mit der Wischerwelle 28 verbundenem Schwenkhebel 30 angelenkt ist, eine Vormontageeinheit bildet. Die Antriebsstange 29 ist dabei am gleichen Anlenkpunkt P wie die Antriebstange 16 an der Antriebskurbel 15 angelenkt. Alternativ dazu könnte diese (29) auch als Schleppstange ausgebildet und mit dem Schwenkhebel 19 gelenkig verbunden sein.

Diese Gleichlaufanlage wird mit den beiden Wischerlagern 17 und 26 an den Befestigungslöchern 4 und 6 und dem Steckbolzen 10 befestigt. Als weiteres Befestigungsmittel dient der Gewindebolzen 20. Dieser kann jedoch auch entfallen. Im Betriebszustand mit den entsprechenden Pendelbewegungen der Wischerwellen 18 und 28 und einem jeweils angeschlossenen Wischerarm (7, 9) ergeben sich die Wischfelder II und III (Fig. 1).

### Bezugszeichenliste

- 1: Scheibenquerträger
- 2: Frontscheibe
- 3: Kante
- 4 - 6: Befestigungsloch
- 7 - 9: Wischerarm
- 10: Steckbolzen
- 11: Teil
- 12: Träger
- 13: Wischermotor
- 14: Getriebe
- 15: Antriebskurbel
- 16: Antriebsstange
- 17: Wischerlager
- 18: Wischerwelle
- 19: Schwenkhebel
- 20: Gewindebolzen
- 21: Halteblech
- 22: Steckbuchse
- 23: Schraubloch
- 24: Außengewinde
- 25: Verlängerungsstück
- 26: Wischerlager
- 27: Außengewinde
- 28: Wischerwelle
- 29: Antriebsstange
- 30: Schwenkhebel
- I - III: Wischfeld
- P: Anlenkpunkt
- R: Rotationsachse

## Patentansprüche

1. Fahrzeug mit einer Scheibenwischeranlage, die wenigstens einen langgestreckten Träger (12, 25) mit einem vormontierten Wischermotor (13), einem Getriebe (14), einer Antriebskurbel (15), wenigstens einem Wischerlager (17, 26) mit einer Antriebswelle (18, 28) für einen Wischerarm (7, 8, 9) und einem Gestänge (16, 29) aufweist, das an der Antriebskurbel (15) und einem mit der Antriebswelle (18, 28) drehfest verbundenen Schwenkhebel (19, 30) angelenkt ist, wobei der Träger (12, 25) mit Befestigungsmitteln (17, 20, 26; 22) zur Anordnung an der Fahrzeugkarosserie versehen ist, wobei die Befestigungsmittel (17, 20, 26; 22) mit an der Fahrzeugkarosserie ausgebildeten Befestigungseinrichtungen (4, 5, 6; 10) korrespondieren, deren Anzahl und Position so bestimmt ist, dass diese die Anordnung sowohl einer Gegenlaufanlage als auch einer Gleichlaufanlage zulassen, **dadurch gekennzeichnet, dass** an einem an der Fahrzeugkarosserie ausgebildeten Scheibenquerträger (1) in Fahrzeugquerrichtung fahrer- und beifahrerseitig jeweils drei im gleichen Abstand voneinander angeordnete Befestigungseinrichtungen (4, 5, 6) angeordnet sind, von denen jeweils die äußere (4) und die mittlere (5) für den einen Teil (11) einer Zwei-Motoren-Gegenlaufanlage vorgesehen sind und die äußere (4) und die innere Befestigungseinrichtung (6) auf der Fahrerseite oder auf der Beifahrerseite für eine Gleichlaufanlage, und dass fahrer- und beifahrerseitig eine weitere Befestigungseinrichtung (10) im Abstand von der Verbindungslinie der äußeren (4) und der mittleren Befestigungseinrichtung (5) an der Fahrzeugkarosserie ausgebildet ist.

2. Fahrzeug nach Anspruch 1, **dadurch gekennzeichnet, dass** die weitere Befestigungseinrichtung (10) ein Steckverbindungselement zur Herstellung einer Steckverbindung mit einem am jeweiligen Träger (12) angeordneten Gegenstück (22) ist, wobei die Steckrichtung im wesentlichen quer zur Rotationsachse (R) der Antriebskurbel (15) gegeben ist.

3. Fahrzeug nach Anspruch 1, **dadurch gekennzeichnet, dass** am Träger (12) im Abstand voneinander zwei Befestigungsmittel (17, 20; 17, 26) zur Festlegung an der Fahrzeugkarosserie ausgebildet sind und ein drittes Befestigungsmittel (22) über ein Halteblech (21) im Abstand von deren Verbindungslinie angeordnet ist.

4. Fahrzeug nach Anspruch 3, **dadurch gekennzeichnet, dass** das dritte Befestigungsmittel ein Steckverbindungselement (22) zur Herstellung einer Steckverbindung mit einem an der Fahrzeugkarosserie angeordneten Gegenstück (10) ist.

5. Fahrzeug nach Anspruch 2, **dadurch gekennzeichnet, dass** der Träger (12) des fahrerseitigen Teils (11) der Zwei-Motoren-Gegenlaufanlage zur Ausbildung einer Gleichlaufanlage wenigstens bis zur inneren fahrerseitigen Befestigungseinrichtung (6) verlängert und mit einem zweiten Wischerlager (26) versehen ist, das zugleich Befestigungsmittel für die Gleichlaufanlage ist und mit der Befestigungseinrichtung (6) korrespondiert und in dem eine mit einem Schwenkhebel (30) versehene zweite Wischerwelle (28) gelagert ist, und dass an der Antriebskurbel (15) eine zweite Antriebsstange (29) oder am Schwenkhebel (19) der ersten Wischerwelle (18) eine Schleppstange angelenkt ist, die am Schwenkhebel (30) der zweiten Wischerwelle (28) angreift.

6. Fahrzeug nach Anspruch 5, **dadurch gekennzeichnet, dass** die Verlängerung des Trägers (12) durch ein Verlängerungsstück (25) gegeben ist, das mit dem Wischerlager (26) als Befestigungsmittel versehen ist und das mit der in diesem gelagerten und mit dem Schwenkhebel (30) versehenen zweiten Wischerwelle (28) und der an diesem angelenkten Antriebsstange (29) oder der Schleppstange eine Vormontageeinheit bildet.

7. Fahrzeug nach Anspruch 6, **dadurch gekennzeichnet, dass** das Verlängerungsstück (25) über eine Schrumpf- oder Schraubverbindung mit dem Träger (12) verbindbar ist.

8. Fahrzeug nach einem oder mehreren der vorhergehenden Ansprüche, **dadurch gekennzeichnet, dass** die Befestigungseinrichtungen Schraublöcher (4, 5, 6) und die Befestigungsmittel die Wischerlager (17, 26) für die Wischerwellen (18, 28) oder Gewindebolzen (20) sind, wobei die Wischerlager (17, 26) auf der dem Gestänge (16, 29) abgewandten Seite des Trägers (12) mit einem Außengewinde (24, 27) versehen sind.

## Claims

1. Vehicle comprising a windscreen wiper system which has at least one elongate support (12, 25) with a preassembled wiper motor (13), a gear (14), a drive crank (15), at least one wiper bearing (17, 26) with a drive shaft (18, 28) for a wiper arm (7, 8, 9), and a linkage (16, 29) which is coupled to the drive crank (15) and to a pivot lever (19, 30) connected in a rotationally fixed manner to the drive shaft (18, 28), wherein the support (12, 25) is provided with fastening means (17, 20, 26; 22) for arrangement on the vehicle body, wherein the fastening means (17, 20, 26; 22) correspond to fastening devices (4, 5, 6; 10) which are formed on the vehicle body and the number and position of which are determined in such a manner that they permit the arrangement both of a contra-rotating system and of a co-rotating system, **characterized in that** three fastening devices (4, 5, 6) which are arranged at an identical distance from one another are in each case arranged in the transverse direction of the vehicle on the driver's side and front passerger's side of a windscreen crossmember (1) formed on the vehicle body, and of which in each case the outer fastening device (4) and the central fastening device (5) are provided for the one part (11) of a two-motor contra-rotating system, and the outer fastening device (4) and the inner fastening device (6) on the driver's side or on the front passenger's side are provided for a co-rotating system, and **in that**, on the driver's side and front passenger's side, a further fastening device (10) is formed on the vehicle body at a distance from the connecting line of the outer fastening device (4) and the central fastening device (5).

2. Vehicle according to Claim 1, **characterized in that** the further fastening device (10) is a plug-in connecting element for producing a plug-in connection to a counterpart (22) arranged on the respective support (12), with the plug-in direction being provided essentially transversely with respect to the axis of rotation (R) of the drive crank (15).

3. Vehicle according to Claim 1, **characterized in that** two fastening means (17, 20; 17, 26) for fixing to the vehicle body are formed at a distance from each other on the support (12), and a third fastening means (22) is arranged at a distance from the connecting line of said fastening means via a retaining plate (21).

4. Vehicle according to Claim 3, **characterized in that** the third fastening means is a plug-in connecting element (22) for producing a plug-in connection to a counterpart (10) arranged on the vehicle body.

5. Vehicle according to Claim 2, **characterized in that** the support (12) of the driver's side part (11) of the two-motor contra-rotating system is extended at least as far as the inner driver's side fastening device (6) in order to form a co-rotating system, and is provided with a second wiper bearing (26) which is at the same time the fastening means for the co-rotating system and corresponds to the fastening device (6) and in which a second wiper shaft (28) which is provided with a pivot lever (30) is mounted, and **in that** a second drive rod (29) is coupled to the drive crank (15), or a tow rod which acts on the pivot lever (30) of the second wiper shaft (28) is coupled to the pivot lever (19) of the first wiper shaft (18).

6. Vehicle according to Claim 5, **characterized in that** the extension of the support (12) is provided by an extension component (25) which is provided with the wiper bearing (26) as the fastening means and which forms a preassembly unit together with the second wiper shaft (28), which is mounted in said wiper bearing and is provided with the pivot lever (30), and the drive rod (29), which is coupled to said pivot lever, or the tow rod.

7. Vehicle according to Claim 6, **characterized in that** the extension component (25) can be connected to the support (12) via a shrink-on connection or screw connection.

8. Vehicle according to one or more of the preceding claims, **characterized in that** the fastening devices are screw holes (4, 5, 6) and the fastening means are the wiper bearings (17, 26) for the wiper shafts (18, 28) or threaded bolts (20), with the wiper bearings (17, 26) being provided with an outer thread (24, 27) on that side of the support (12) which faces away from the linkage (16, 29).

## Revendications

1. Véhicule comprenant une installation d'essuie-glace, qui présente au moins un support allongé (12, 25) muni d'un moteur d'essuie-glace prémonté (13), d'une transmission (14), d'une manivelle d'entraînement (15), d'au moins un support d'essuie-glace (17, 26) avec un arbre d'entraînement (18, 28) pour un bras d'essuie-glace (7, 8, 9) et une tringlerie (16, 29) qui est articulée à la manivelle d'entraînement (15) et à un levier pivotant (19, 30) connecté de manière solidaire en rotation à l'arbre d'entraînement (18, 28), le support (12, 25) étant pourvu de moyens de fixation (17, 20, 26 ; 22) pour son agencement sur la carrosserie du véhicule, les moyens de fixation (17, 20, 26 ; 22) correspondant avec des dispositifs de fixation (4, 5, 6, ; 10) réalisés sur la carrosserie du véhicule, dont le nombre et la position sont déterminés de telle sorte qu'ils permettent l'agencement à la fois d'une installation à sens opposés et d'une installation de même sens, **caractérisé en ce que** trois dispositifs de fixation respectifs (4, 5, 6) disposés de manière équidistante les uns des autres sont disposés sur un support transversal de pare-brise (1) réalisé sur la carrosserie du véhicule dans la direction transversale du véhicule du côté du conducteur et du côté du passager, dont à chaque fois le dispositif de fixation extérieur (4) et le dispositif de fixation central (5) sont prévus pour la partie (11) d'une installation à sens opposés à deux moteurs, et le dispositif de fixation extérieur (4) et le dispositif de fixation intérieur (6) sont prévus du côté du conducteur ou du côté du passager pour une installation de même sens, et **en ce que** du côté du conducteur et du côté du passager, un autre dispositif de fixation (10) est réalisé à distance de la ligne de connexion du dispositif de fixation extérieur (4) et du dispositif de fixation central (5) sur la carrosserie du véhicule.

2. Véhicule selon la revendication 1, **caractérisé en ce que** l'autre dispositif de fixation (10) est un élément de connexion par enfichage pour créer une connexion par enfichage avec une pièce conjuguée (22) disposée sur le support respectif (12), la direction d'enfichage étant essentiellement transversale à l'axe de rotation (R) de la manivelle d'entraînement (15).

3. Véhicule selon la revendication 1, **caractérisé en ce que** deux moyens de fixation (17, 20 ; 17, 26) sont réalisés à distance l'un de l'autre sur le support (12) pour la fixation à la carrosserie du véhicule et un troisième moyen de fixation (22) est disposé à distance de leur ligne de connexion par le biais d'une tôle de retenue (21).

4. Véhicule selon la revendication 3, **caractérisé en ce que** le troisième moyen de fixation est un élément de connexion par enfichage (22) pour créer une connexion par enfichage avec une pièce conjuguée (10) disposée sur la carrosserie du véhicule.

5. Véhicule selon la revendication 2, **caractérisé en ce que** le support (12) de la partie (11) du côté du conducteur, de l'installation à sens opposés à deux moteurs, est prolongé pour la réalisation d'une installation de même sens au moins jusqu'au dispositif de fixation interne du côté du conducteur (6), et est pourvu d'un deuxième support d'essuie-glace (26) qui est en même temps un moyen de fixation pour l'installation de même sens, et qui correspond au dispositif de fixation (6) et est monté dans le deuxième arbre d'essuie-glace (28) pourvu d'un levier pivotant (30), et **en ce qu'**une deuxième tige d'entraînement (29) est articulée à la manivelle d'entraînement (15), ou qu'une tige d'articulation est articulée au levier pivotant (19) du premier arbre d'essuie-glace (18), laquelle vient en prise avec le levier pivotant (30) du deuxième arbre d'essuie-glace (28).

6. Véhicule selon la revendication 5, **caractérisé en ce que** le prolongement du support (12) est constitué par une pièce de prolongement (25), qui est pourvue du support d'essuie-glace (26) en tant que moyen de fixation et qui forme une unité de prémontage avec le deuxième arbre d'essuie-glace (28) monté dans celle-ci et pourvu du levier pivotant (30) et avec la tige d'entraînement (29) ou la tige d'articulation articulée à celle-ci.

7. Véhicule selon la revendication 6, **caractérisé en ce que** la pièce de prolongement (25) peut être connectée au support (12) par le biais d'une connexion par frettage ou par vissage.

8. Véhicule selon l'une quelconque ou plusieurs des revendications précédentes, **caractérisé en ce que** les dispositifs de fixation sont des trous de vissage (4, 5, 6) et les moyens de fixation sont les supports d'essuie-glace (1", 26) pour les arbres d'essuie-glace (18, 28) ou des boulons filetés (20), les supports d'essuie-glace (17, 26) étant pourvus d'un filetage extérieur (24, 27) du côté du support (12) opposé à la tringlerie (16, 29).
